# EUROPEAN PATENT SPECIFICATION

(11) **EP 0 450 721 B1**
(45) Date of publication and mention of the grant of the patent: **30.08.1995**
(21) Application number: 91200742.4
(22) Date of filing: 28.03.1991
(51) Int. Cl.: A23L 1/015, A23L 1/211

(54) **Method for de-activating mycotoxin**
Verfahren zur Mykotoxin-Inaktivierung
Procédé pour inactiver des mycotoxines

(30) Priority: 02.04.1990 NL 9000774
(43) Date of publication of application: 09.10.1991
(73) Proprietor: Emetco B.V., NL-3083 AS Rotterdam (NL)
(72) Inventor: De Vries, Peter Frank, NL-3817 GH Amersfoort (NL)
(74) Representative: Prins, Hendrik Willem

(56) References cited:
- AT-B- 334 187
- DE-C- 806 194
- FR-A- 2 280 323
- US-A- 4 546 004
- US-E- 30 386
- JOURNAL OF THE AMERICAN OIL CHEMISTS' SOCIETY, vol. 53, no. 5, 1976, pages 204-206; L.P. CODIFER et al.: "Aflatoxin inactivation: Treatment of peanut meal with formaldehyde and calcium hydroxide"

## Description

The present invention relates to a method for deactivating mycotoxin, such as aflatoxin, in a particle form raw material for animal and human food products.

Mycotoxins, such as aflatoxins, achrotoxin A, citrimin, patulin, penicillanic acid, cyclochlorotin, rubratoxin A and zearalenone, can occur as a result of fungus growth in particle form raw materials intended for animal or human food products. These raw materials comprise scraps and flakes of products of tropical origin, such as cottonseed, peanuts, coconuts, and corn grains, wheat grit and the like. For a review article on the detoxification of mycotoxins reference is made to "Übersichten zur Tierernärung, 11 (83) pages 47-80.

US re-issue 30,386 discloses a method for de-activating aflatoxin by using ammonia or an organic amine. After the de-activation of the aflatoxin the basicity is neutralized by adding an organic or inorganic acid.

J. Am. Oil Chem. Soc. 35, 204-206 (1967) discloses a treatment of peanut meal with either formaldehyde or formaldehyde in combination with calcium hydroxide in order to de-activate aflatoxins.

The invention has for its object to provide a method for de-activating mycotoxin in a particle form raw material, wherein for de-activation use is made of a base and an acid, while the salt content remains limited in the neutralized treated raw material. According to the invention this is achieved in that the method for de-activating mycotoxin, such as aflatoxin, in a particle form raw material for animal and human food products, comprises steps of:
i) treating a one fraction of the raw material with a base;
ii) treating another fraction of the raw material with an acid;
iii) combining raw material treated with base and raw material treated with acid.

The invention is based on the insight that for de-activating mycotoxin the raw material can be treated with both a base and an acid, and additional chemicals for neutralizing the respectively base- or acid-treated raw material thus obtained can be dispensed with by mixing a raw material treated with base with a raw material treated with acid. For de-activating mycotoxin an excess of base and acid are in any case always used owing to practical and process considerations.

In order to realize a sufficient de-activation of mycotoxin, it is recommended that during treatment with base the pH is ≧ 9. Optimal de-activation takes place with a pH of ≧ 10, and in practice the pH will lie between circa 10-11 during the base treatment.

For an optimal de-activation of the mycotoxin using acid, it is recommended that the acid treatment is performed at a pH ≦ 3. The most favourable results are obtained at a pH ≦ 2.5. In a practical embodiment of the method according to the invention the pH for the acid treatment lies between circa 2.5-2.

Since the quantity of base and the quantity of acid used for the treatment of the raw material are different, the raw material treated with base and the raw material treated with acid are however preferably combined in a quantity such that the pH of the treated raw material becomes substantially equal to the pH of the raw material to be treated. Thus created is a treated raw material with a considerably reduced mycotoxin concentration, the pH of which is substantially equal to that of the original raw material. After mixing the pH usually lies in the range of 5-8, preferably between 6.5 and 7. For peanut flakes the final pH is for example 6.7.

Those inorganic and organic compounds can be used as base and acid which deactivate the mycotoxin rapidly and to a considerable extent but which have substantially no negative effect on the food value of the raw material, such as the crude protein content, the crude fat content, the crude cellulose content and also the cattle feed unit-milk yield (VEM value). Finally, the salts formed in the food product must be permissible.

Sodium hydroxide, potassium hydroxide, calcium hydroxide or magnesium hydroxide can for example be used as base. Hydrochloric acid, sulphuric acid and acetic acid can be used as acid. Preferably used as acid/base pairs are: hydrochloric acid/sodium hydroxide, sulphuric acid/calcium hydroxide. The respectively formed sodium chloride and calcium sulphate are permitted in the food product and do not have a disturbing effect in the food.

In order to prevent as far as possible affecting of the installation in which the method is performed, it is recommended that the raw material be first brought to the treatment temperature after the acid or the base has been added. After heating, the raw material can thus be directly transferred to a corrosion-resistant, thermally insulated space and the contact between acid and base on the one hand and the installation on the other hand is as short as possible at the high treatment temperature. According to the invention it is likewise possible with one installation to successively treat raw material fractions with base and with acid and to mix them with each other after the required storage time. In general the treatment temperature lies between 70-100°, and preferably between 80 and 95°.

The storage time lies between 8-36 hours, and a storage time of about 24 hours is preferably adhered to. Since formaldehyde accelerates the decomposition of mycotoxin and changes the digestibility of the proteins, it is advantageous to add formaldehyde to the raw material during the treatment with base. An upper limit for the quantity of formaldehyde added is generally 0.5% w/w, and more preferably 0.1-0.3% w/w, since formaldehyde can polymerize amino acids, whereby the digestibility of the proteins in the raw material decreases.

Mentioned and other features of the method according to the invention will be further elucidated hereinafter in the light of two embodiments given by way of example, with reference to the annexed drawing.

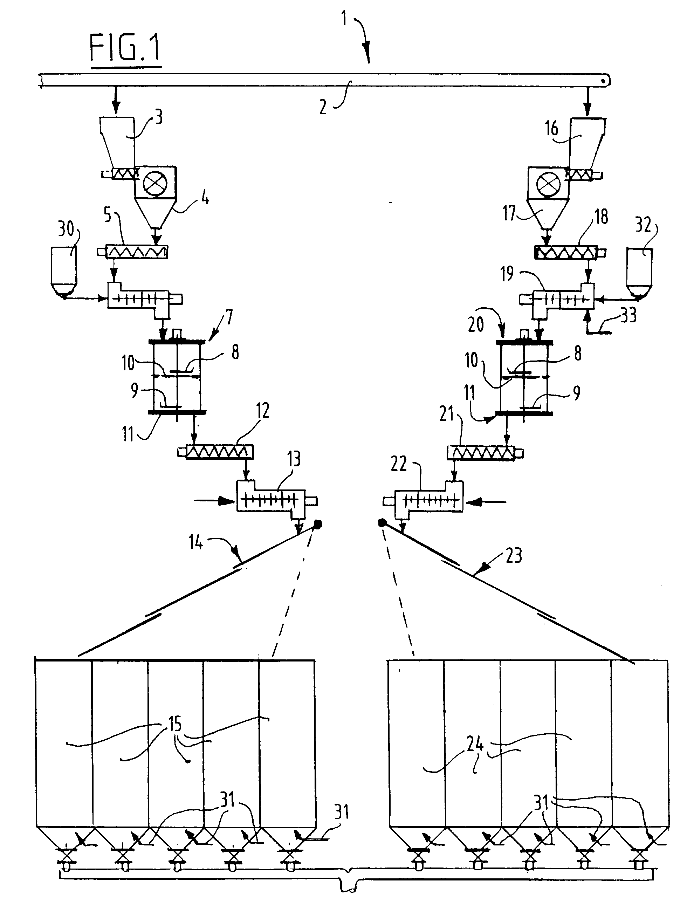

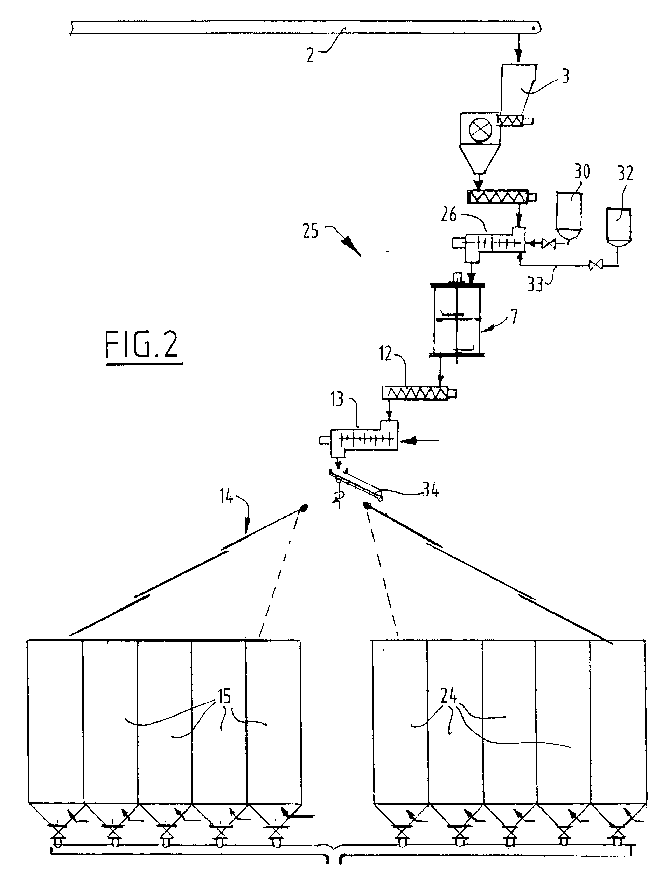

In the drawing figures 1 and 2 each show a schematic flow diagram with the different processing units for performing the method according to the invention.

In the device 1 according to the invention (figure 1) peanut flakes with a pH of 6.5 and an aflatoxin content of 0.30 ppm are fed via a transport chain 2 to a bunker 3. The bunker delivers the raw material to a weighing unit 4 which supplies measured quantities of raw material via a worm conveyor 5 to a mixer 6.

In the mixer 6 the raw material is mixed with a hydrochloric acid solution coming from a container 30 to pH 2.3. The raw material provided with acid is fed to a conditioning boiler 7 comprising dishes 10, 11 provided with rotating mixing arms 8, 9. The conditioned raw material is fed via a worm conveyor 12 to a mixer 13, in which the raw material is brought to a temperature of 80°C using steam.

From the mixer 13 the raw material, acidified and brought to temperature, is distributed via a distributer unit 14 over a number of thermally insulated, corrosion-resistant concrete silos 15, which are pre-heated with hot air via lines 31.

A base treatment of another fraction of the raw material is performed in parallel with the acid treatment of the raw material. For this purpose the transport chain 2 unloads another fraction of the raw material into a bunker 16. From the bunker 16 the raw material passes through a weighing unit 17, so that weighed quantities of raw material are fed to a mixer 19 via a worm conveyor 18.

In the mixer 19 the raw material is brought to a pH of 10.8 using a sodium hydroxide solution coming from a container 32. 0.2% w/w formaldehyde is simultaneously added to the raw material via a line 33.

The raw material treated with base is added to a conditioning boiler 20 which has substantially the same construction as the conditioning boiler 7. The conditioned alkaline raw material is then fed via a worm conveyor 21 to a mixer 22, in which the raw material is brought to a temperature of 80°C using steam. Immediately thereafter the heated, alkaline raw material is distributed using a distributer unit 23 to a number of thermally insulated, corrosion-resistant concrete silos 24, which are likewise pre-heated with hot air.

After a treatment time of about 24 hours the raw material from the silos 15 and 24 is mixed together in a part of the device not shown here.

The raw material from the silo 15 had a pH of 2.3, a sodium content of 0.02%, a chlorine content of 4.55%, and an aflatoxin content of 0.02 ppm.

The raw material from the silos 24 had a pH of 10.8, a sodium content of 3.1%, a chlorine content of 0.12% and an aflatoxin content of 0.005 ppm.

By mixing both raw materials a mixed raw material was formed with a pH of 6.5, and a sodium chloride content of about 3%, and an aflatoxin content of 0.010 ppm. This raw material can be used in cattle feed.

Figure 2 shows a variant of the device shown in figure 1.

Figure 2 clearly shows that only one installation is used to alternately treat the raw material respectively with acid and alkali, whereafter both types of treated raw material are stored in separate silos and, after observing the necessary storage time, are mixed into a usable raw material, in which the aflatoxin content has decreased by more than 90% compared with the initial state.

The device 25 comprises a number of device components corresponding with those from figure 1, which are therefore also designated with the same reference numerals. The transport chain 2 releases the product into a bunker 3, whereafter a weighed quantity of raw material is treated in the mixer 26 with concentrated sulphuric acid. After conditioning in the conditioning boiler 7 and treatment with steam in the mixer 13, the product treated with acid (pH 2.0) is stored in the silos 15. A following quantity of the raw material is then treated in the mixer 26 with calcium hydroxide. The treated raw material is then heated in the mixer 13 and distributed over the silos 24 via a pivoting trough 34. After a storage time of 24 hours both the raw materials treated respectively with acid and base are mixed. The mixed, treated raw material has a pH of 6.6, while the aflatoxin content has been reduced to 0.010 ppm.

The treated raw material with a moisture content of circa 20-25%, is subsequently pelleted and finally dried to a moisture content of a maximum of 8%. This raw material is then suitable for use in the preparation of different foodstuffs for both animal and human use.

## Claims

1. Method for de-activating mycotoxin, such as aflatoxin, in a particle form raw material for animal and human food products, comprising the steps of:
i) treating a one fraction of the raw material with a base;
ii) treating another fraction of the raw material with an acid; and
iii) combining raw material treated with base and raw material treated with acid.

2. Method as claimed in claim 1, wherein the treatment with base is performed at pH ≧ 9.

3. Method as claimed in claim 2, wherein the treatment with base is performed at pH ≧ 10 and preferably at pH 10-11.

4. Method as claimed in claims 1-3, wherein the treatment with acid is performed at pH ≦ 3.

5. Method as claimed in claim 4, wherein the treatment with acid is performed at pH ≦ 2.5 and preferably pH 2.5-2.

6. Method as claimed in claims 1-5, wherein the raw material treated with base and the raw material treated with acid are combined in a quantity such that the pH of the treated raw material is substantially equal to the pH of the raw material to be treated.

7. Method as claimed in claim 6, wherein the pH of the treated raw material lies between 5 and 8, preferably between 6 and 7.5 and more preferably between 6.5 and 7.

8. Method as claimed in claims 1-7, wherein the raw material is treated with formaldehyde.

9. Method as claimed in claims 1-8, wherein the base and the acid form a salt that is acceptable in the food product.

10. Method as claimed in claims 1-9, wherein the base or the acid is added to the raw material, the raw material is brought to treatment temperature and subsequently stored in a thermally insulated space.

11. Method as claimed in claim 10, wherein the treatment temperature lies between about 70-100°C and the storage time lies between approximately 8-36 hours.

## Patentansprüche

1. Verfahren zur Inaktivierung von Mykotoxinen, wie Aflatoxinen, in einem in Teilchenform vorliegenden Rohmaterial für tierische und menschliche Nahrungsmittel, umfassend die Stufen:
i) Behandlung von einem Bruchteil des Rohmaterials mit einer Base,
ii) Behandlung von einem anderen Bruchteil des Rohmaterials mit einer Säure und
iii) Vereinigung des mit der Base behandelten Rohmaterials mit dem mit der Säure behandelten Rohmaterial.

2. Verfahren gemäß dem Anspruch 1, wobei die Behandlung mit der Base bei einem pH-Wert von ≧ 9 durchgeführt wird.

3. Verfahren gemäß dem Anspruch 2, wobei die Behandlung mit der Base bei einem pH-Wert von ≧ 10 und vorzugsweise von 10 bis 11 durchgeführt wird.

4. Verfahren gemaß den Ansprüchen 1 bis 3, wobei die Behandlung mit der Säure bei einem pH-Wert von ≦ 3 durchgeführt wird.

5. Verfahren gemäß dem Anspruch 4, wobei die Behandlung mit der Säure bei einem pH-Wert von ≦ 2,5 und vorzugsweise 2,5 bis 2 durchgeführt wird.

6. Verfahren gemäß den Ansprüchen 1 bis 5, wobei das mit der Base behandelte Rohmaterial und das mit der Säure behandelte Rohmaterial in solchen Mengen miteinander vereinigt werden, daß der pH-Wert vom behandelten Rohmaterial im wesentlichen dem pH-Wert des zu behandelnden Rohmaterials entspricht.

7. Verfahren gemäß dem Anspruch 6, wobei der pH-Wert des behandelten Rohmaterials zwischen 5 und 8, vorzugsweise zwischen 6 und 7,5 und insbesondere zwischen 6,5 und 7 liegt.

8. Verfahren gemäß den Ansprüche 1 bis 7, wobei das Rohmaterial mit Formaldehyd behandelt wird.

9. Verfahren gemäß den Ansprüchen 1 bis 8, wobei die Base und die Säure ein Salz zu bilden vermögen, das in dem Nahrungsmittel zulässig ist.

10. Verfahren gemäß den Ansprüchen 1 bis 9, wobei die Base oder die Säure dem Rohmaterial zugesetzt werden, das Rohmaterial dann einer Temperaturbehandlung unterworfen wird und anschließend in einem wärmeisolierten Raum gelagert wird.

11. Verfahren gemäß dem Anspruch 10, wobei die Temperaturbehandlung zwischen 70 bis 100°C erfolgt und die Lagerungszeit etwa 8 bis 36 Stunden beträgt.

## Revendications

1. Procédé pour désactiver les mycotoxines telles que l'aflatoxine, dans une matière première sous forme particulaire destinée à des produits pour l'alimentation animale et humaine, qui comprend les étapes consistant :
i) à traiter une fraction de la matière première avec une base ;
ii) à traiter une autre fraction de la matière première avec un acide ; et
iii) à combiner la matière première traitée par une base et la matière première traitée par un acide.

2. Procédé selon la revendication 1, dans lequel le traitement par un acide est effectué à pH ≧ 9.

3. Procédé selon la revendication 2, dans lequel le traitement par une base est effectué à pH ≧ 10 et de préférence à pH 10-11.

4. Procédé selon les revendications 1 à 3, dans lequel le traitement par un acide est effectué à pH ≦ 3.

5. Procédé selon la revendication 4, dans lequel le traitement par un acide est effectué à pH ≦ 2,5 et de préférence a pH 2,5-2.

6. Procédé selon les revendications 1 à 5, dans lequel la matière première traitée par une base et la matière première traitée par un acide, sont combinées en des quantités telles que le pH de la matière première traitée soit essentiellement égal au pH de la matière première à traiter.

7. Procédé selon la revendication 6, dans lequel le pH de la matière première traitée est compris entre 5 et 8, de préférence entre 6 et 7,5, et plus particulièrement entre 6,5 et 7.

8. Procédé selon les revendications 1 à 7, dans lequel la matière première est traitée par le formaldéhyde.

9. Procédé selon les revendications 1 à 8, dans lequel la base et l'acide forment un sel qui est acceptable dans le produit alimentaire.

10. Procédé selon les revendications 1 à 9, dans lequel la base ou l'acide est ajouté à la matière première, la matière première est portée à la température de traitement, puis stockée dans un espace calorifugé.

11. Procédé selon la revendication 10, dans lequel la température de traitement est comprise entre environ 70 et 100°C, et le temps de stockage est compris entre environ 8 et 36 heures.
